# EUROPÄISCHE PATENTSCHRIFT

(11) **EP 2 384 867 B1**
(45) Veröffentlichungstag und Bekanntmachung des Hinweises auf die Patenterteilung: **05.09.2012**
(21) Anmeldenummer: 11003594.6
(22) Anmeldetag: 03.05.2011
(51) Int. Cl.: B26D 3/18, B26D 7/06, A22C 25/20, A22C 17/00, B26D 9/00, B26D 7/02

(54) **Schneidmaschine für Gefrierfleischblöcke**
Cutting machine for frozen meat blocks
Machine de découpage pour blocs de viande congelée

(30) Priorität: 07.05.2010 DE 102010019749
(43) Veröffentlichungstag der Anmeldung: 09.11.2011
(73) Patentinhaber: MAGURIT Gefrierschneider GmbH, 42897 Remscheid (DE)
(72) Erfinder: Gödtel, Hans Günter, 42929 Wemelskirchen (DE); Koll, Jürgen, 42929 Wemelskirchen (DE); Manderla, Wener, 42929 Wemelskirchen (DE); Vieth, Dino, 42929 Wermelskirchen (DE); Vieth, Walter, 42929 Wemelskirchen (DE)
(74) Vertreter: Sparing Röhl Henseler

(56) Entgegenhaltungen:
- DE-A1- 2 147 405
- DE-A1- 3 731 359
- DE-A1- 3 918 449

## Beschreibung

Die Erfindung betrifft eine Schneidmaschine für Gefrierfleischblöcke nach dem Oberbegriff des Anspruchs 1.

Aus DE 37 31 359 A1 ist eine Vorrichtung zum Zerkleinern von Blöcken aus gefrorenen Nahrungsmitteln zu Würfeln mit einer Einrichtung zum Zerteilen der gegen einen Anschlag gedrückten Blöcke in Scheiben mittels eines auf- und abbeweglichen Messers bekannt. Die Einrichtung zum Zerteilen der Blöcke in Scheiben ist als Guillotine ausgebildet, die vertikale Schnitte ausführt. Zusätzlich ist ein verstellbarer Anschlag vorgesehen, der mit dem Messer auf- und abbeweglich ist. Zwischen dem Anschlag und dem Messer befindet sich ein Durchtrittsspalt für die jeweils von dem jeweiligen Block abgeschnittene Scheibe. Diese fällt über ein Leitblech auf ein Transportband, das mittels eines Antriebs während des Betriebs der Einrichtung permanent umläuft.

Das Transportband ist über Seitenteile am auf- und abbeweglichen Messer aufgabeseitig schwenkbar angelenkt, verläuft schräg abwärts zu einem Würfelschneider und stützt sich über Rollen auf einer geneigten Fläche an der Zuführseite des Würfelschneiders abgabeseitig ab. Das Transportband fördert eine vom Messer abgeschnittene Scheibe gegen eine Anschlagleiste, wodurch diese ausgerichtet wird, da das Transportband permanent läuft. Die durch die Anschlagleiste ausgerichtete Scheibe wird dann durch das Transportband ausgerichtet dem Würfelschneider zugeführt. Die Anschlagleiste, die dazu dient, dass die zu würfelnde Scheibe ausgerichtet in den Würfelschneider gelangt und somit ein gleichmäßiges Andrücken der Scheibe gegen den Würfelschneider erlaubt, ist nicht nur aufwändig, sondern verlängert auch die Förderstrecke zwischen der Scheibenschneideinrichtung und dem Würfelschneider. Das Transportband muss folglich an die zusätzliche Ausrichtstation angepasst werden.

Aus DE 21 47 405 A1 ist eine Schneidmaschine zur Zerlegung blockartig anfallender Nahrungsmittel in Scheiben oder Stücken mit einem in waagerechter Ebene umlaufenden Messer bekannt. Das Schneidgut wird in einem senkrecht stehenden Zuführschacht abwärts transportiert. Unterhalb des Förderschachtes befindet sich ein Stapel- und Schindelband.

Aus DE 39 18 449 A1 ist eine Schneidmaschine bekannt, bei der ein Schneidgut mit einer geregelten Geschwindigkeit einer Schneidstation zugeführt wird. In der Schneidstation wird das Schneidgut durch ein umlaufendes Messer in Scheiben geschnitten, die daraufhin unter der Einwirkung der Schwerkraft auf ein Förderband unterhalb der Schneidstation fallen.

Aufgabe der Erfindung ist es daher, eine Schneidmaschine für Gefrierfleischblöcke zu schaffen, die kompakt aufgebaut ist.

Diese Aufgabe wird durch die Merkmale des Anspruchs 1 gelöst.

Hierdurch wird eine Schneidmaschine für Gefrierfleischblöcke geschaffen, die die beiden Schneideinrichtungen baulich verbessert kombiniert. Die Scheibenschneideinrichtung und die Fördereinrichtung sind derart zueinander ausgerichtet, dass die Scheiben ausgerichtet auf die Fördereinrichtung fallen. Die Anwendung von horizontalen Schnitten ermöglicht, dass die Scheiben geradlinig fallen. Das Umklappen der Scheiben auf die Fördereinrichtung am Ausgang der Scheibenschneideinrichtung entfällt. Ferner entfällt, dass die Scheiben mit der Fördereinrichtung eine Höhendifferenz durchlaufen.

Die erste Schneideinrichtung, d.h. die Scheibenschneideinrichtung, schneidet Scheiben, die direkt flächig auf die Fördereinrichtung fallen können. Das Ergebnis ist eine kontrollierte Scheibenübergabe vom Scheibenschneider zum Würfler durch horizontalen Schnitt bei vorzugsweise im Wesentlichen senkrecht stehendem Block.

Da die Fördereinrichtung nicht mehr zur Ausrichtung der Scheiben benötigt wird, kann die Fördereinrichtung getaktet betrieben werden. Die Würfeltiefe kann über einen Taktvorschub der Fördereinrichtung, insbesondere ein Vorschubband, präzise, leicht und schnell gesteuert werden. Ferner wird die Würfelkapazität erhöht, da die Beschickung der Fördereinrichtung mit Scheiben schneller ist. Es ist insbesondere kein zusätzliches Vorschubelement erforderlich.

Die Zufuhr der Blöcke zur Schneidaufgabe der ersten Schneideinrichtung kann horizontal mit Kippvorrichtung für die Blöcke oder vertikal erfolgen. Die Beschickungshöhe ist damit wählbar und kann insbesondere niedrig ausgebildet werden.

Weitere Vorteile und Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

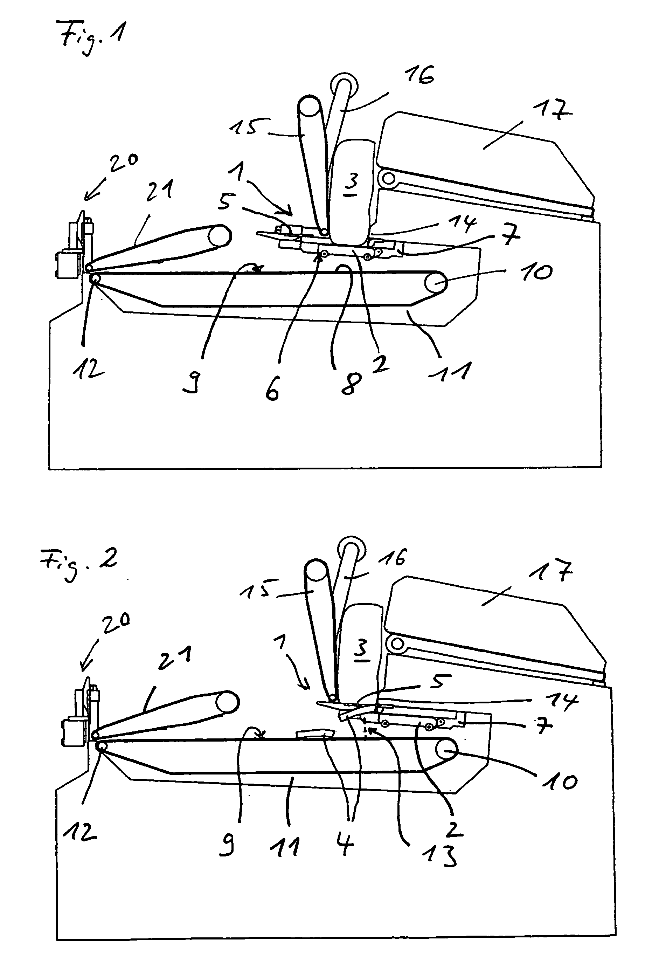

Fig. 1 und Fig. 2 zeigen schematisch Funktionsschritte einer Schneidmaschine.

Die Fig. 1 und Fig. 2 zeigen eine Schneidmaschine für Gefrierfleischblöcke mit einer ersten Schneideinrichtung 1 zum Zerteilen von gegen einen Anschlag 2 bewegten Blöcken 3 in Scheiben 4. Die erste Schneideinrichtung 1 ist demnach ein Scheibenschneider. Die erste Schneideinrichtung 1 umfasst ein bewegliches Messer 5, das an einem hin- und herbeweglichen Messerhalter 6 befestigt ist. Der Messerhalter 6 ist über Führungsgestänge 7 und einem Zylinder hin- und herbeweglich, insbesondere vorwärts und rückwärts verfahrbar.

Wie Fig. 1 und Fig. 2 zeigen, werden die Blöcke 3 der ersten Schneideinrichtung 1 in vertikaler Richtung zugeführt. Die erste Schneideinrichtung 1 führt Horizontalschnitte aus unter beabstandetem Überfahren eines aufgabeseitigen Abschnitts 8 einer Bahn 9 einer Förderstrecke einer Fördereinrichtung 11. Die Bahn 9 der Förderstrecke erstreckt sich von einem aufgabeseitigen Ende 10 der Fördereinrichtung 11 bis hin zu einem abgabeseitigen Ende 12 der Fördereinrichtung 11.

Die Fördereinrichtung 11 dient zum Überführen der geschnittenen Scheiben 4 auf der Bahn 9 der Förderstrecke zu einer zweiten Schneideinrichtung 20. Die zweite Schneideinrichtung 20 zerteilt die Scheiben 4 in ein Schneidgut, wozu die zweite Schneideinrichtung 20 abgabeseitig der Fördereinrichtung 11 angeordnet ist. Die zweite Schneideinrichtung 20 kann in bekannter Weise als Streifen- oder Würfelschneider ausgebildet sein. Gemäß Fig. 1 und 2 ist ein Würfelschneider oder alternativ ein Streifenschneider vorgesehen.

Zwischen einer Abgabeseite der ersten Schneideinrichtung 1 und einer Aufgabeseite der Bahn 9 der Förderstrecke wird eine geradlinige Fallstrecke 13 für die Scheiben 4 ausgebildet. Die geschnittenen Scheiben 4 fallen über ihre Schnittflächen auf die Bahn 9. Die Fallstrecke ist kurz ausgebildet dadurch, dass der Messerhalter 6 benachbart und ausgerichtet zur Fördereinrichtung 11 über dieser angeordnet ist. Die Scheiben 4, die die so angeordnete Schneideinrichtung 1 abtrennt, fallen unter ihrer Schwerkraftwirkung auf die Bahn 9, wo sie abtransportiert werden.

Die erste Schneideinrichtung 1 schneidet die Scheiben 4 vorzugsweise parallel oder geringfügig schräg zur Bahn 9 der Förderstrecke. Der Schneidwinkel der ersten Schneideinrichtung 1 gegenüber einem aufgabeseitigen Ende 10 der Bahn 9 der Förderstrecke ist vorzugsweise kleiner 20°. Der Messerhalter 6 ist vorzugsweise leicht schräg gestellt, um die Blöcke 3 unter ihrem Eigengewicht gegen einen seitlichen Anschlag 14 zu drücken.

Die Fördereinrichtung 11 ist vorzugsweise ein Stetigförderer, der horizontal fördert und im Takt bewegbar ist. Bevorzugt ist ferner, dass die Fördereinrichtung 11 als Bandförderer ausgebildet ist. Der Taktbetrieb ist insbesondere für das Würfeln der Scheiben 4 vorteilhaft, wobei der Vorschub vorzugsweise unterbrochen wird zum Würfeln von Scheiben 4.

Der ersten Schneideinrichtung 1 ist ein erster Niederhalter 15 zugeordnet, der zusammen mit dem Anschlag 14 abwärtsfördernde Seitenführungen für eine Schwerkraft-Positionierung der zu schneidenden Blöcke 3 in einer Schneidstellung bildet. Der erste Niederhalter 15 ist vorzugsweise als schwenkbar angelenkter Führungsbandförderer ausgebildet. Der erste Niederhalter 15 kann ferner an einen Schwenkarm bzw. eine Aufhängung 16 angelenkt sein. Der erste Niederhalter 15 kann dann an unterschiedliche Dickenabmessungen eines Blocks 3 angepasst werden.

Der zweiten Scheideinrichtung 20 ist vorzugsweise ein zweiter Niederhalter 21 zugeordnet, der zusammen mit der Bahn 9 der Förderstrecke vorschubfördernde Seitenführungen für eine Vorschub-Positionierung der zu schneidenden Scheiben 4 in einer Schneidstellung für beispielsweise den Würfelschneider bildet. Der zweite Niederhalter 21 kann wie der erste Niederhalter 15 als schwenkbar angelenkter Führungsbandförderer ausgebildet sein. Alternativ kann der zweite Niederhalter 21 auch linear auslenkbar sein. Die schwenkbare Ausbildung der Niederhalter 15, 21 ermöglicht eine schwerkraftbedingte, quasi automatische Anpassung der Niederhalterfunktion an Abmessungsabweichungen des zu schneidenden Guts.

Der erste und zweite Niederhalter 15, 21 sind deshalb vorzugsweise als Schwerkraftniederhalter ausgebildet, die über eine jeweilige Aufhängung 16 verschiebbar angeordnet sind.

Der Bandvorschub der Fördereinrichtung 11 und der Führungsbandförderer der Niederhalter 15, 21 ist beispielsweise über eine Steuereinrichtung aufeinander abstimmbar. Ferner können die Fördereinrichtung 11 und die Niederhalter 15, 21 gleiche Bandmatten oder Gurte besitzen. Ausgangsseitig der zweiten Schneideinrichtung 20 ist vorzugsweise in bekannter Weise ein Abwurfleitblech vorgesehen.

Die Blöcke 3 können über eine kippbare Aufgabeeinrichtung 17 in eine vertikale Stellung bewegt werden. Alternativ können die Blöcke 3 über einen vertikalen Schacht (nicht dargestellt) zugeführt werden. Die Blöcke 3 werden dann jeweils unter ihrem Eigengewicht gegen den Anschlag 2 des Messerhalters 6 gedrückt, wobei die gewünschte Schnittseite in vertikaler Richtung die Aufgabeseite für die erste Schneideinrichtung 1 bildet. Die Positionierung des Anschlages 2 zum Messer 5 ermöglicht in einfacher Weise eine Einstellung der Scheibendicke.

Der erste Niederhalter 15 ermöglicht ferner einen kontrollierten Blockvorschub als beispielsweise steuerbarer, höhenverstellbarer Blockniederhalter mit Bandvorschub. Gleiches gilt für den Niederhalter 21 in Bezug auf die Scheiben 4. Der Niederhalter 21 kann als steuerbarer, höhenverstellbarer Scheibenniederhalter mit Bandvorschub arbeiten.

Zum Schutz der Aufgabeseite der ersten Schneideinrichtung 1 können dort Seitenwangen vorgesehen sein.

## Patentansprüche

1. Schneidmaschine für Gefrierfleischblöcke mit einer ersten Schneideinrichtung (1) zum Zerteilen von gegen einen Anschlag (2) bewegten Blöcken (3) in Scheiben (4) mittels eines beweglichen Messers (5) und einer Fördereinrichtung (11) zum Überführen der Scheiben (4) auf einer Bahn (9) einer Förderstrecke zu einer zweiten Schneideinrichtung (20) zum Zerteilen der Scheiben (4) in ein Schneidgut, wozu diese abgabeseitig der Fördereinrichtung (11) angeordnet ist, **dadurch gekennzeichnet, dass** die Blöcke (3) der ersten Schneideinrichtung (1) in vertikaler Richtung zuführbar sind, und die erste Schneideinrichtung (1) Horizontalschnitte unter beabstandetem Überfahren eines aufgabeseitigen Abschnitts (8) der Bahn (9) der Förderstrecke ausführt, wozu der ersten Schneideinrichtung (1) ein erster Niederhalter (15) zugeordnet ist, der zusammen mit einem Anschlag (14) abwärtsfördernde Seitenführungen für eine Schwerkraft-Positionierung der zu schneidenden Blöcke (3) in einer Schneidstellung bildet.

2. Schneidmaschine nach Anspruch 1, **dadurch gekennzeichnet, dass** zwischen einer Abgabeseite der ersten Schneideinrichtung (1) und einer Aufgabeseite der Bahn (9) der Förderstrecke eine geradlinige Fallstrecke (13) für die Scheiben (4) ausgebildet ist.

3. Schneidmaschine nach Anspruch 1 oder 2, **dadurch gekennzeichnet, dass** die erste Schneideinrichtung (1) die Scheiben (4) parallel oder geringfügig schräg zur Bahn (9) der Förderstrecke schneidet.

4. Schneidmaschine nach einem der Ansprüche 1 bis 3, **dadurch gekennzeichnet, dass** der Schneidwinkel der ersten Schneideinrichtung (1) gegenüber einem aufgabeseitigen Ende (10) der Bahn (9) der Förderstrecke kleiner 20° ist.

5. Schneidmaschine nach einem der Ansprüche 1 bis 4, **dadurch gekennzeichnet, dass** die Fördereinrichtung (11) ein Stetigförderer ist, der im Takt bewegbar ist.

6. Schneidmaschine nach einem der Ansprüche 1 bis 5, **dadurch gekennzeichnet, dass** die Fördereinrichtung (11) als Bandförderer ausgebildet ist.

7. Schneidmaschine nach einem der Ansprüche 1 bis 6, **dadurch gekennzeichnet, dass** der der ersten Schneideinrichtung (1) zugeordnete Niederhalter (15) als schwenkbar angelenkter Führungsbandförderer ausgebildet ist.

8. Schneidmaschine nach einem der Ansprüche 1 bis 7, **dadurch gekennzeichnet, dass** als zweite Schneideinrichtung (20) ein Würfelschneider vorgesehen ist.

9. Schneidmaschine nach einem der Ansprüche 1 bis 8, **dadurch gekennzeichnet, dass** der zweiten Scheideinrichtung (20) ein zweiter Niederhalter (21) zugeordnet ist, der zusammen mit der Bahn (9) der Förderstrecke vorschubfördernde Seitenführungen für eine Vorschub-Positionierung der zu schneidenden Scheiben (4) in einer Schneidstellung bildet.

10. Schneidmaschine nach Anspruch 9, **dadurch gekennzeichnet, dass** der der zweiten Schneideinrichtung (20) zugeordnete zweite Niederhalter (21) als schwenkbar oder linear angelenkter Führungsbandförderer ausgebildet ist.

11. Schneidmaschine nach Anspruch 7 und 10, **dadurch gekennzeichnet, dass** der erste und zweite Niederhalter (15, 21) als Schwerkraftniederhalter ausgebildet sind, die über eine Aufhängung (16) verschiebbar angeordnet sind.

12. Schneidmaschine nach Anspruch 11, **dadurch gekennzeichnet, dass** der Bandvorschub der Fördereinrichtung (11) und der Niederhalter (15, 21) aufeinander abstimmbar ist.

13. Scheidmaschine nach Anspruch 12, **dadurch gekennzeichnet, dass** die Fördereinrichtung (11) und die Niederhalter (15, 21) gleiche Bandmatten besitzen.

14. Schneidmaschine nach einem der Ansprüche 1 bis 13, **dadurch gekennzeichnet, dass** die Fördereinrichtung (11) als Horizontalförderer ausgebildet ist.

## Claims

1. Cutting machine for blocks of frozen meat, having a first cutting device (1) for cutting blocks (3), which are moved against a stop (2), into slices (4) by means of a movable blade (5) and a conveying device (11) for transferring the slices (4) on a web (9) of a conveyor line to a second cutting device (20) for cutting the slices (4) into a cut product, for which purpose the second cutting device is arranged at the discharge side of the conveying device (11), **characterised in that** the blocks (3) are arranged to be supplied to the first cutting device (1) in the vertical direction and the first cutting device (1), passing over a charge-side section (8) of the web (9) of the conveyor line at a distance therefrom, makes horizontal cuts, for which purpose the first cutting device (1) is associated with a first holding-down means (15) which, together with a stop (14), forms downwardly conveying lateral guides for positioning the blocks (3) to be cut under gravity in a cutting position.

2. Cutting machine according to claim 1, **characterised in that** between a discharge side of the first cutting device (1) and a charge side of the web (9) of the conveyor line there is provided a straight line of drop (13) for the slices (4).

3. Cutting machine according to claim 1 or 2, **characterised in that** the first cutting device (1) cuts the slices (4) in parallel or at a slight slant with respect to the web (9) of the conveyor line.

4. Cutting machine according to any one of claims 1 to 3, **characterised in that** the cutting angle of the first cutting device (1) is less than 20° with respect to a charge-side end (10) of the web (9) of the conveyor line.

5. Cutting machine according to any one of claims 1 to 4, **characterised in that** the conveying device (11) is a continuous conveyor which is movable in cycles.

6. Cutting machine according to any one of claims 1 to 5, **characterised in that** the conveying device (11) is in the form of a belt conveyor.

7. Cutting machine according to any one of claims 1 to 6, **characterised in that** the holding-down means (15) associated with the first cutting device (1) is in the form of a pivotally articulated guide belt conveyor.

8. Cutting machine according to any one of claims 1 to 7, **characterised in that** a dicer is provided as second cutting device (20).

9. Cutting machine according to any one of claims 1 to 8, **characterised in that** the second cutting device (20) is associated with a second holding-down means (21) which, together with the web (9) of the conveyor line, forms forward-feeding lateral guides for forward-feed positioning of the slices (4) to be cut in a cutting position.

10. Cutting machine according to claim 9, **characterised in that** the second holding-down means (21) associated with the second cutting device (20) is in the form of a pivotally or linearly articulated guide belt conveyor.

11. Cutting machine according to claims 7 and 10, **characterised in that** the first and second holding-down means (15, 21) are in the form of gravity holding-down means which are displaceable by means of a mounting arrangement (16).

12. Cutting machine according to claim 11, **characterised in that** the belt advance movements of the conveying device (11) and of the holding-down means (15, 21) can be matched to one another.

13. Cutting machine according to claim 12, **characterised in that** the conveying device (11) and the holding-down means (15, 21) have the same belt mats.

14. Cutting machine according to any one of claims 1 to 13, **characterised in that** the conveying device (11) is in the form of a horizontal conveyor.

## Revendications

1. Machine de découpe pour blocs de viande surgelée avec un premier dispositif de coupe (1) pour couper des blocs (3) transportés contre une butée (2) en tranches (4), avec un couteau mobile (5) et un dispositif de convoyage (11) pour le transfert desdites tranches (4) sur une piste (9) d'une section de convoyeur, vers un deuxième dispositif de coupe (20), disposé du côté de la sortie dudit convoyeur (11), pour la découpe desdites tranches (4) sous forme d'un produit découpé, **caractérisé en ce que** lesdits blocs (3) sont délivrables audit premier dispositif de coupe (1) en direction verticale, et que ledit premier dispositif de coupe (1) délivre des découpes horizontales sous un franchissement à distance d'une section d'entrée (8) de ladite piste (9) de ladite section de convoyeur, et où un premier serre-flan (15) est disposé au niveau dudit premier dispositif de coupe (1), et forme, en commun avec une butée (14) des guidages latéraux de transport en descente pour un positionnement sous contrainte desdits blocs (3) à découper dans une position de découpe.

2. Machine de découpe selon la revendication 1, **caractérisée en ce qu'**une zone linéaire de chute (13) pour lesdites tranches (4) est formé entre un côté de sortie dudit premier dispositif de coupe (1) et un côté d'entrée de ladite piste (9) dudit convoyeur.

3. Machine de découpe selon la revendication 1 ou 2, **caractérisée en ce que** ledit premier dispositif de coupe (1) découpe lesdites tranches (4) parallèlement ou de façon faiblement inclinée par rapport à ladite piste (9) dudit convoyeur.

4. Machine de découpe selon l'une des revendications 1 à 3, **caractérisée en ce que** l'angle de coupe dudit premier dispositif de coupe (1) par rapport à une extrémité d'entrée (10) de ladite piste (9) dudit convoyeur est inférieur à 20°.

5. Machine de découpe selon l'une des revendications 1 à 4, **caractérisée en ce que** ledit convoyeur (11) est un convoyeur continu, qui est mobile de façon cadencée.

6. Machine de découpe selon l'une des revendications 1 à 5, **caractérisée en ce que** ledit convoyeur (11) est un convoyeur à bande.

7. Machine de découpe selon l'une des revendications 1 à 6, **caractérisée en ce que** ledit serre-flan (15) au niveau dudit premier dispositif de coupe (1) est constitué par un convoyeur de transport à bande articulé et inclinable.

8. Machine de découpe selon l'une des revendications 1 à 7, **caractérisée en ce que** ledit deuxième dispositif de découpe (20) est prévu sous la forme d'un découpeur de cubes.

9. Machine de découpe selon l'une des revendications 1 à 8, **caractérisée en ce qu'**un deuxième serre-flan (21) est installé au niveau dudit deuxième dispositif de coupe (20), et **en ce qu'**il forme, avec ladite piste (9) de section de convoyeur, des guidages latéraux assurant l'avance pour un positionnement en butée desdites tranches (4) en découpe dans une position de découpe.

10. Machine de découpe selon la revendication 9, **caractérisée en ce que** ledit deuxième serre-flan (21) agencé au niveau dudit deuxième dispositif de coupe (20) est constitué par un convoyeur de transport à bande articulé inclinable ou linéaire.

11. Machine de découpe selon les revendications 7 et 10, **caractérisée en ce que** ledit premier serre-flan (15) et ledit deuxième serre-flan (21) sont des serre-flans fonctionnant par gravité, qui sont agencés de façon mobile par rapport à une suspension (16).

12. Machine de découpe selon la revendication 11, **caractérisée en ce que** l'avance de bande entre ledit convoyeur (11) et lesdits serre-flans (15, 21) est ajustable entre les uns et les autres.

13. Machine de découpe selon la revendication 12, **caractérisée en ce que** ledit convoyeur (11) et lesdits serre-flans (15, 21) possèdent le même maillage de bande.

14. Machine de découpe selon l'une des revendications 1 à 13, **caractérisée en ce que** ledit convoyeur (11) est agencé en tant que convoyeur horizontal.
